# EUROPÄISCHE PATENTANMELDUNG

(11) **EP 2 803 607 A1**
(43) Veröffentlichungstag der Anmeldung: **19.11.2014**
(21) Anmeldenummer: 14001756.7
(22) Anmeldetag: 19.05.2014
(51) Int. Cl.: B65G 47/54, B65G 47/82

(54) **Vorrichtung zum Fördern von Gegenständen**

(30) Priorität: 17.05.2013 DE 102013008531
(71) Anmelder: FAB GmbH Fördertechnik und Anlagenbau, 79761 Waldshut-Tiengen (DE)
(72) Erfinder: Müller, Anton, 79774 Albbruck (DE)
(74) Vertreter: Drobnik, Stefanie

(57) **Zusammenfassung**

Eine Vorrichtung zum Fördern von Gegenständen 5 weist einen ersten Förderer 1 auf, von dem seitlich ein zweiter Förderer 2 sowie ein dritter Förderer 3 abgehen. Eine Verteileinrichtung in Form eines in die eine Drehrichtung oder in die andere Drehrichtung antreibbaren Rades 4 mit vertikaler Drehachse sorgt für die gewünschte Verteilung des zu transportierenden Gegenstandes 6.

## Beschreibung

Die Erfindung betrifft eine Vorrichtung zum Fördern von Gegenständen nach dem Oberbegriff des Anspruchs 1.

Die erfindungsgemäße Fördervorrichtung für Gegenstände, z.B. Reifen, geht von einem ersten Förderer aus, an dessen Ende sich ein Verteiler befindet. Denn von diesem ersten Förderer gehen am Ende der Förderstrecke zur einen Seite ein zweiter Förderer und zur anderen Seite ein dritter Förderer ab. Dies bedeutet insgesamt, daß die vorbeschriebenen drei Förderer im wesentlichen eine T-Anordnung definieren.

Um die Gegenstände entweder auf den zweiten Förderer oder auf den dritten Förderer verteilen zu können, ist in diesem Kreuzungsbereich der drei Förderer eine verstellbare Verteileinrichtung angeordnet, welche - wie ausgeführt - die Gegenstände entweder dem zweiten Förderer oder dem dritten Förderer zuleitet. Bei dieser verstellbaren Verteileinrichtung handelt es sich um ein stangenförmiges, verschwenkbares Profil, welches entsprechend ausgerichtet wird, so daß die Gegenstände gewissermaßen davon abprallen und je nach Ausrichtung entweder dann dem zweiten Förderer oder dem dritten Förderer zugeführt werden.

Der Erfindung liegt die **Aufgabe** zugrunde, bei einer Vorrichtung zum Fördern von Gegenständen der eingangs angegeben Art die Verteileinrichtung zu verbessern.

Die technische **Lösung** ist gekennzeichnet durch die Merkmale im Kennzeichen des Anspruchs 1.

Dadurch ist eine Vorrichtung zum Fördern von Gegenständen geschaffen, welche sich durch eine verbesserte Verteileinrichtung auszeichnet. Erfindungsgemäß weist die Verteileinrichtung ein Rad mit vertikaler Drehachse auf. Dieses Rad ist entweder in die eine Drehrichtung oder in die andere Drehrichtung antreibbar. Die Ebene des Rades ist dabei parallel zur Ebene der Förderer ausgerichtet und befindet sich knapp über der Förderebene. Soll somit das durch den ersten Förderer zugeführte Gut dem zweiten Förderer zugeführt werden, wird dieses Ausschleusrad entsprechend gedreht, so daß der Gegenstand aufgrund der reibenden Wechselwirkung mit dem Rad dem gewünschten weiteren Förderer zugeführt wird. Umgekehrt, wenn das Fördergut dem anderen Förderer zugeführt werden soll, wird das Ausschleusrad in die andere Richtung gedreht.

Gemäß der Weiterbildung in Anspruch 2 handelt es sich bei dem Rad vorzugsweise um ein Speichenrad, wie es beispielsweise für Zweiräder verwendet wird. Der Vorteil ist, daß dadurch die zu bewegende Schwungmasse relativ gering ist und somit schnelle Umkehrungen der Drehrichtung möglich sind.

Vorzugsweise weist das Rad gemäß der Weiterbildung in Anspruch 3 einen mit Luft befüllten Reifen auf. Zum einen wird dadurch der Aufprall des Gegenstandes gedämpft, zum anderen kann der Aufprall durch Veränderung des Luftdrucks verändert werden.

Gemäß der Weiterbildung in Anspruch 4 kann es sich beim ersten Förderer um ein Kunststoffgliederband mit lose laufenden Querrollen handeln. Andere Typen von Förderbändern sind gleichermaßen denkbar.

Gemäß der Weiterbildung in Anspruch 5 kann es sich beim zweiten sowie beim dritten Förderer um ein Förderband, einen Rollenförderer, eine Gefällerollenbahn etc. handeln.

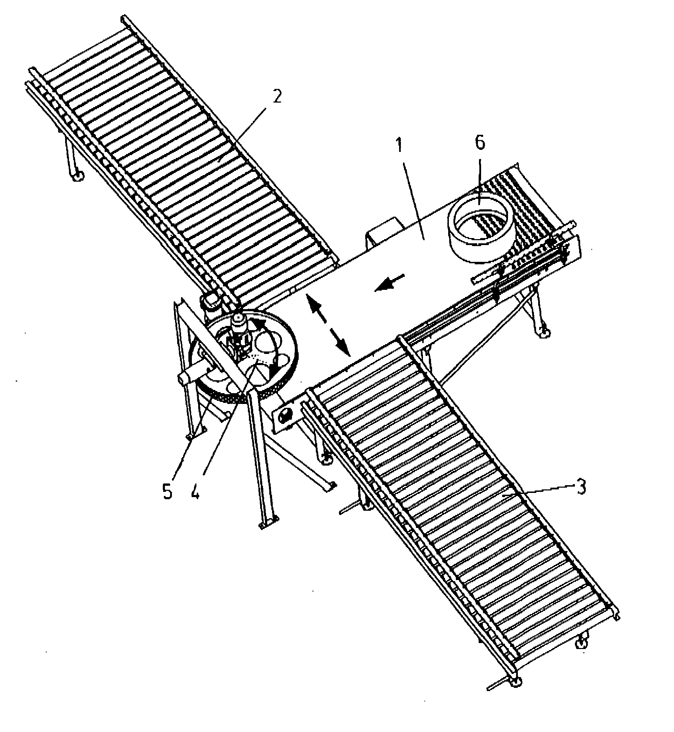

Ein Ausführungsbeispiel einer erfindungsgemäßen Vorrichtung zum Fördern von Gegenständen wird nachfolgend anhand der Zeichnung beschrieben. Diese Zeichnung zeigt in einer perspektivischen Ansicht die Fördervorrichtung.

Die Fördervorrichtung weist zunächst einen ersten Förderer 1 auf. Dieser kann ein Kunststoffgliederband mit lose laufenden Querrollen aufweisen.

Am Ende dieses ersten Förderers 1 geht zur einen Seite ein zweiter Förderer 2 sowie zur anderen Seite ein dritter Förderer 3 ab. Bei diesen Förderern 2, 3 kann es sich um ein Förderband, um einen Rollenförderer, um eine Gefällerollenbahn oder dgl. handeln.

An der T-förmigen Kreuzungsstelle der drei Förderer 1, 2, 3 befindet sich eine Verteileinrichtung in Form eines angetriebenen Rades 4 mit vertikaler Drehachse. Das Rad 4 weist einen mit Luft befüllten Reifen 5 auf, wobei der Luftdruck vorzugsweise veränderbar ist. Dieses angetriebene Rad 4 ist an einem entsprechenden Gestell angeordnet, dessen Auslegerarm in den Kreuzungsbereich ragt. Das angetriebene Rad 4 kann dabei entweder in die eine Richtung oder in die andere Richtung angetrieben werden.

Die Funktionsweise ist wie folgt:

Auf dem ersten Förderer 1 wird ein Gegenstand 6 beispielsweise in Form eines Reifens transportiert. Der Gegenstand 6 gelangt dann in den Kreuzungsbereich der drei Förderer 1, 2, 3 und stößt dabei an dem Rad 4 an. Je nach Drehrichtung dieses Rades 4 wird dann der Gegenstand 6 entweder dem zweiten Förderer 2 oder dem dritten Förderer 3 zugeführt. Somit ist durch eine entsprechende Drehrichtung des Rades 4 eine definierte Verteilung des zugeführten Gegenstandes 6 realisiert.

### Bezugszeichenliste

- 1: erster Förderer
- 2: zweiter Förderer
- 3: dritter Förderer
- 4: Rad
- 5: Reifen
- 6: Gegenstand

## Patentansprüche

1. Vorrichtung zum Fördern von Gegenständen (6),
mit einem ersten Förderer (1),
mit einem zweiten Förderer (2) sowie einem dritten Förderer (3), welche am Ende des ersten Förderers (1) von diesem seitlich abgehen, sowie
mit einer verstellbaren Verteileinrichtung, welche den vom ersten Förderer (1) kommenden Gegenstand (6) entweder dem zweiten Förderer (2) oder dem dritten Förderer (3) zuführt,
**dadurch gekennzeichnet,**
**daß** die Verteileinrichtung ein wahlweise in die eine Drehrichtung oder in die andere Drehrichtung antreibbares Rad (4) mit vertikaler Drehachse ist.

2. Förderer nach dem vorhergehenden Anspruch,
**dadurch gekennzeichnet,**
**daß** das Rad (4) ein Speichenrad ist.

3. Förderer nach einem der vorhergehenden Ansprüche,
**dadurch gekennzeichnet,**
**daß** das Rad (4) einen mit Luft befüllbaren Reifen (5) aufweist.

4. Förderer nach einem der vorhergehenden Ansprüche,
**dadurch gekennzeichnet,**
**daß** der erste Förderer (1) ein Kunststoffgliederband mit lose laufenden Querrollen ist.

5. Förderer nach einem der vorhergehenden Ansprüche,
**dadurch gekennzeichnet,**
**daß** der zweite Förderer (2) und der dritte Förderer (3) ein Förderband, ein Rollenförderer, eine Gefällerollenbahn etc. ist.
